# FASCICULE DE BREVET EUROPEEN

(11) **EP 1 456 849 B1**
(45) Date de publication et mention de la délivrance du brevet: **09.11.2005**
(21) Numéro de dépôt: 02805398.1
(22) Date de dépôt: 17.12.2002
(51) Int. Cl.: G11B 33/04

(54) **ROSACE DE MAINTIEN D UN DISQUE SUR UN SUPPORT**
FLANSCH ZUM HALTEN EINER SCHEIBE AUF EINEM TRÄGER
FLANGE FOR MAINTAINING A DISC ON A SUPPORT

(30) Priorité: 20.12.2001 FR 0116590
(43) Date de publication de la demande: 15.09.2004
(73) Titulaire: Moulage Industriel de Perseigne "MIP", 72600 Mamers (FR)
(72) Inventeur: CROUAN, Alain, F-72000 Le Mans (FR)
(74) Mandataire: Breese, Pierre
(86) Numéro de dépôt international: PCT/FR2002/004409
(87) Numéro de publication internationale: WO 2003/054884

(56) Documents cités:
- US-A- 4 709 812
- US-A- 5 450 953
- US-A- 5 609 249
- US-A- 5 697 496
- US-A- 5 819 926
- US-A- 6 059 102

## Description

La présente invention a pour objet une rosace de maintien d'un disque sur un support de disque audionumérique tel que DVD, CD, CD-ROM, pouvant être empilée avec des rosaces identiques.

Ces supports d'information comportent un trou central destiné, notamment à leur stockage et à leur montage sur les appareils de lecture, ce trou étant dans la plupart des cas d'un diamètre de 15 mm. Pour la distribution dans le grand public, ces disques sont inclus dans un coffret et maintenus dans celui-ci par encliquetage dans une rosace. Celles-ci comprennent habituellement un certain nombre de pattes élastiques en saillie sur une base. À l'extrémité supérieure des pattes et, du côté extérieur est prévu un rebord dont le diamètre de la courbe d'enveloppe est légèrement supérieur à celui du trou central du disque de sorte que, lorsque le disque est posé sur la base, les pattes soient d'abord ramenées vers le centre, puis retrouvent, par élasticité, leur position d'origine après insertion du disque ce qui maintient celui-ci en position sur la basé tout en permettant son extraction. L'enveloppe extérieure des pattes est cylindrique pour correspondre au diamètre du trou central d'un disque.

À l'origine, l'ensemble support plus rosace était fabriqué en une seule opération par injection de matière plastique telle que du polystyrène. Or, pour un ensemble de raisons pratiques, notamment d'impression, le coffret plastique d'origine est de plus en plus remplacé par une couverture en carton, là rosace restant en matière plastique en raison de ses qualités mécaniques. Cette rosace est généralement collée sur la platine en carton.

Les documents US 6 059 102 A et US 5 609 249 A décrivent des examples de rosaces selon le préambule de la revendication 1.

Mais, bien entendu, afin de réduire les coûts de conditionnement, la fabrication de tels emballages est effectuée sur des machines automatiques à très grande vitesse.

Le problème qui se pose, et qui est résolu par l'invention, est celui de l'alimentation des machines automatiques en rosaces.

L'invention repose sur l'idée qu'il est possible d'utiliser les pattes escamotables pour réaliser l'assemblage ou empilage de plusieurs rosaces, les rouleaux ainsi constitués étant d'une manipulation facile et pouvant être aisément introduits dans une machine qui peut les prélever individuellement à très haute cadence.

Selon l'invention, la rosace comprenant une base à partir de laquelle font saillie des pattes élastiques dont l'extrémité libre présente un rebord est caractérisée en ce qu'elle comprend à sa partie inférieure des moyens d'encliquetage de la partie supérieure d'une autre rosace.

Avantageusement, ces moyens d'encliquetage consistent en un jonc ou nervure, éventuellement interrompu, dont le diamètre intérieur est inférieur au diamètre de l'enveloppe des rebords ou en des picots de sorte que, lors de l'insertion de la partie supérieure d'une rosace, ces moyens provoquent l'effacement momentané des pattes élastiques. Puis, après poursuite du mouvement, le retour des pattes à l'intérieur du jonc assure le maintien de la rosace dans le fond d'une autre rosace.

Ainsi, il est possible d'éncliqueter la partie supérieure d'une rosace dans la partie inférieure d'une autre rosace et de constituer une pile ou rouleau qui peut être aisément manipulé et introduite dans une machine de pose de rosaces sur des supports quelconques, notamment par collage sur du carton.

Selon une autre caractéristique de l'invention, le diamètre intérieur du jonc est sensiblement égal au diamètre de l'enveloppe cylindrique des pattes de la rosace, au-dessous du rebord ou talon supérieur.

Le diamètre intérieur du jonc peut être défini par la présence d'un godron.

Le jonc peut être disposé à la base des pattes et sur celles-ci et réduit à un ensemble de picots régulièrement répartis. Il peut également être formé dans la base de la rosace.

L'invention vise également un rouleau ou pile de rosaces constitué de rosaces telles que définies ci-dessus, encliquetées l'une avec ou sur l'autre.

D'autres caractéristiques et avantages de l'invention apparaîtront au cours de la description qui va suivre d'un mode particulier de réalisation, donné uniquement à titre d'exemple non limitatif, en regard des dessins qui représentent :
- La figure 1, une coupe selon la ligne I-I de la figure 2 de deux rosaces superposées;
- la figure 2, une vue par-dessus d'une rosace;
- la figure 3, une vue en perspective de l'encliquetage d'une patte élastique sur une autre ;
- la figure 4, un autre mode de réalisation du jonc d'encliquetage.

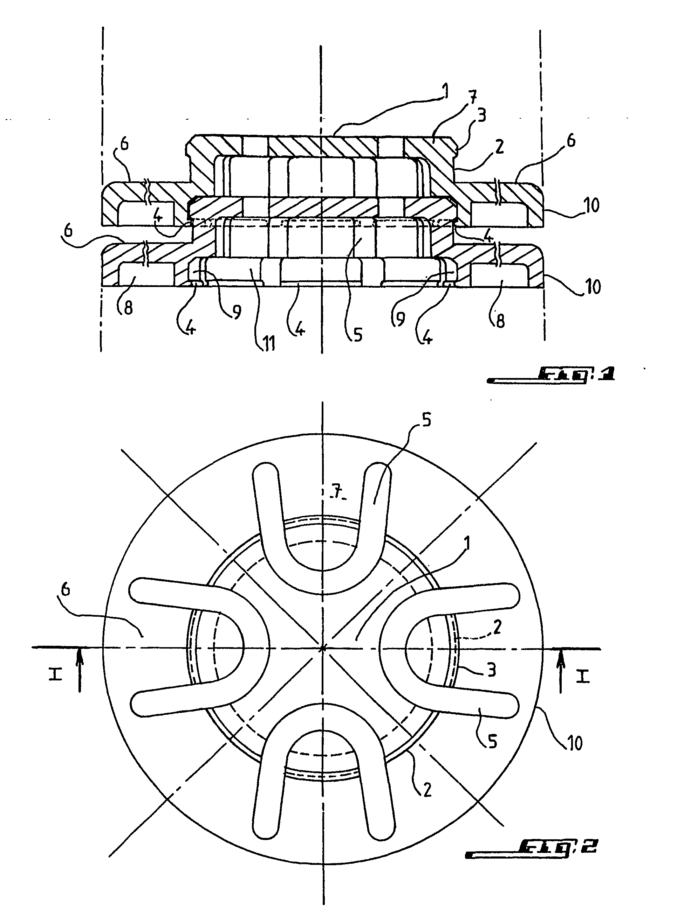

Sur l'ensemble des figures, les mêmes références désignent les mêmes éléments. Sur la figure 1, on voit qu'une rosace comprend un plateau supérieur 1 au sommet d'un cylindre 2. Ce cylindre repose sur une base 6. La base 6 et le plateau supérieur 1 présentent des fentes 5 sensiblement radiales. Ces fentes délimitent des languettes élastiques 7. Dans le mode de réalisation particulier représenté, le plateau 1 et les côtés du cylindre 2 constituent un centrage du disque sur la rosace et le diamètre du cylindre 2 est égal au diamètre du trou circulaire du disque (non représenté). Mais l'invention peut, bien entendu, être appliquée dans le cas où ce centrage n'existe pas, seules des pattes élastiques constituant dans ce cas une couronne d'accrochage.

À l'arrière de chaque patte 7 est prévu un rebord 3 de forme arrondie ou chanfreinée. C'est le contact du bord du trou du disque (non représenté) qui provoque le déplacement de la partie supérieure des pattes 7 vers le centre de la rosace et le passage du disque autour du cylindre 2. Le retour des pattes dans leur position originale maintient le disque contre la base 6 qui constitue une surface d'appui pour la couronne centrale du disque. Ce qui vient d'être décrit correspond à une rosace classique.

Selon l'invention, La base 6 repose sur un support quelconque par un rebord cylindrique 10. À l'intérieur de la base 10 est formé un jonc ou nervure coaxiale 9. La nervure 9 forme une chambre cylindrique 11 dans laquelle vont pénétrer les parties supérieures de pattes 7 d'une autre rosace.

Conformément à l'invention, la nervure 9 présente, à sa partie inférieure des picots ou godrons 4 en saillie à l'intérieur de la cavité centrale. Le passage des pattes 7 de la rosace inférieure sur ces godrons provoque la déformation des pattes 7 et l'encliquetage de celles-ci contre le flanc de la nervure 9. Bien entendu, le diamètre interne de la nervure 9 est égal au diamètre externe du cylindre 2 ou légèrement supérieur de sorte que le cylindre 2 puisse être introduit dans la cavité 11 sans frottement important, autre que celui des rebords 3 des pattes 7.

C'est-à-dire que, comme dans le cas du montage d'un disque sur une rosace, l'introduction de la partie supérieure d'une rosace inférieure dans le fond d'une rosace supérieure provoque le resserrement des pattes 7 de la rosace inférieure vers le centre ce qui permet l'encliquetage de celle-ci avec une rosace supérieure ou précédente lorsque l'assemblage se fait sur chant.

Entre le jonc 9 et le rebord 10 est formée une chambre annulaire 8 qui a notamment pour but de recevoir un adhésif de fixation sur un support quelconque après, bien entendu, séparation de la rosace considérée de la pile ou rouleau dans laquelle elle a été intégrée lors de sa fabrication, après son injection.

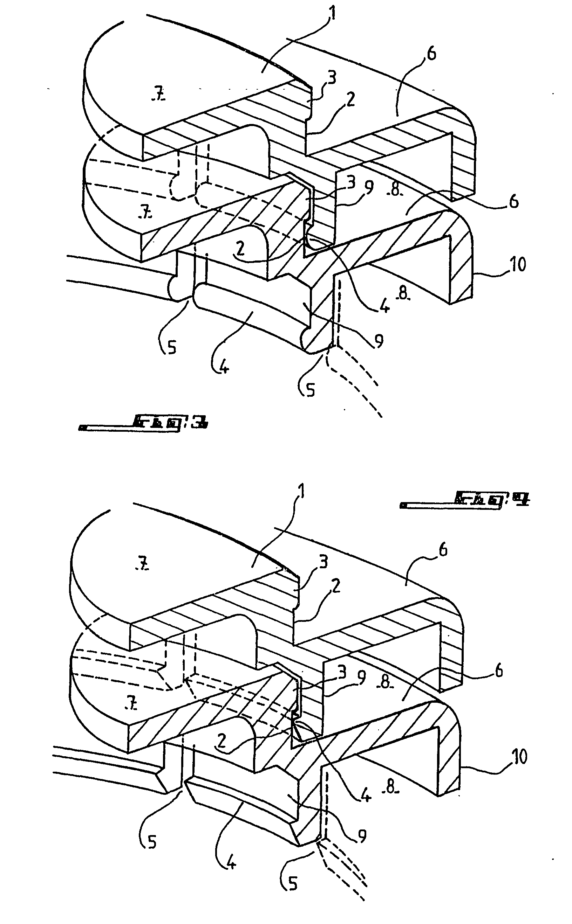

La figure 2 représente une vue par-dessus d'une rosace particulière donnée à titre d'exemple. Cette rosace est à symétrie axiale de révolution. Quatre fentes en « U » déterminent quatre pattes 7. On voit sur cette figure que seules les pattes 7 présentent un rebord 3 dont l'enveloppe est de diamètre supérieur à celui du cylindre 2. Mais, la rosace peut être Constituée uniquement d'un ensemble de pattes, en nombre quelconque, présentant toutes un rebord ou talon 3 permettant leur rapprochement temporaire vers le centre.

Sur la figure 3 est représenté, en coupe partielle, un assemblage de deux pattes, appartenant chacune à une rosace, superposées dans une pile. Sur chacune de celles-ci, on retrouve les rebords 3 faisant saillie latéralement au-dessus de la base 6 d'une hauteur sensiblement égale à l'épaisseur d'un disque. Le diamètre du secteur cylindrique 2 correspond sensiblement au diamètre du trou du disque. Dans cet exemple, le godron 4 est à section sensiblement semi cylindrique. Sa présence oblige une patte 7 à se plier en direction du centre.

Sur la figure 4, le godron 4 est biseauté ce qui facilite l'assemblage de deux rosaces.

Il va de soi que de nombreuses variantes peuvent être apportées, notamment par substitution de moyens techniques équivalents, sans sortir pour cela du cadre de l'invention comme défini par les revendications. En particulier, elle peut être adaptée à des rosaces de formes non cylindriques.

## Revendications

1. Rosace de maintien d'un disque sur un support comprenant une base (6) à partir de laquelle font saillie des pattes élastiques (7) dont l'extrémité libre présente un rebord (3) **caractérisée en ce qu'**elle comprend à une partie inférieure des moyens d'encliquetage (4,9) d'une partie supérieure d'une autre rosace identique.

2. Rosace selon la revendication 1, **caractérisée en ce que** les moyens d'encliquetage consistent en un jonc ou nervure (9), interrompu, dont le diamètre intérieur est inférieur au diamètre de l'enveloppe des rebords (3), présentant, à sa partie inférieure un godron (4).

3. Rosace selon la revendication 2, **caractérisée en ce que** le diamètre intérieur du godron (4) est sensiblement égal au diamètre de l'enveloppe cylindrique (2) des pattes (7) de la rosace.

4. Rosace selon la revendication 1, **caractérisée en ce que** le jonc (9) est disposé à la base des pattes (7) sur celles-ci.

5. Rosace selon la revendication 2, **caractérisée en ce que** le jonc (9) est formé sous la base (6) d'une rosace.

6. Rosace selon la revendication 1, **caractérisée en ce qu'**elle comprend un centre (1,2) dans lequel des fentes (5) déterminent des pattes élastiques (7).

7. Rouleau de rosaces **caractérisé en ce qu'**il est constitué de rosaces selon l'une quelconque des revendications précédentes, encliquetées l'une sur l'autre.

## Patentansprüche

1. Haltungsrosette für eine Scheibe auf einer Halterung bestehend aus einem Untersatz (6) von welchem aus zwei elastische Schenkel (7) hervorragen, deren freibewegliches Ende einen Rand (3) aufweist, **dadurch gekennzeichnet, dass** sie an einem unteren Teil Mittel zum Einrasten (4,9) eines oberen Teils einer anderen identischen Rosette aufweist.

2. Rosette nach Anspruch 1, **dadurch gekennzeichnet, dass** die Einrastmittel aus einer Wulst oder einer Rippe (9), unterbrochen, bestehen, deren Innendurchmesser kleiner ist als der Durchmesser der Umkleidung der Ränder (3), welche an ihrem unteren Teil eine Beule (4) aufweist.

3. Rosette nach Anspruch 2, **dadurch gekennzeichnet, dass** der Innendurchmesser der Beule (4) wesentlich gleich gro ist wie der Durchmesser der zylindrischen Umkleidung (2) der Schenkel (7) der Rosette.

4. Rosette nach Anspruch 1, **dadurch gekennzeichnet, dass** die Wulst (9) am Ansatz der Schenkel (7) auf diesen letzteren angebracht ist.

5. Rosette nach Anspruch 2, **dadurch gekennzeichnet, dass** die Wulst (9) unter dem Untersatz (6) einer Rosette gebildet ist.

6. Rosette nach Anspruch 1, **dadurch gekennzeichnet, dass** sie eine Mitte (1,2) umfasst, in welcher Schlitze (5) die elastischen Schenkel (7) bestimmen.

7. Rosettenrolle **dadurch gekennzeichnet, dass** sie aus Rosetten nach einem der vorangehenden Ansprüche besteht, welche übereinander eingerastet sind.

## Claims

1. Rosette for holding a disc onto a support, comprising a base (6) from which extend elastic arms (7) whose free end has a projecting edge (3), **characterised in that** it comprises in a lower part with interlocking means (4, 9) with an upper part of another identical rosette.

2. Rosette of claim 1, **characterised in that** the interlocking means consist of a cheek or a rib (9), that is non-continuous, and whose internal diameter is smaller than the diameter of the outside envelope of the projecting edges (3), with a gadroon (4) at its lower section.

3. Rosette of claim 2, **characterised in that** the internal diameter of the gadroon (4) is substantially equal to the cylindrical envelope (2) of the arms (7) of the rosette.

4. Rosette of claim 1, **characterised in that** the cheek (9) is positioned at the base of the arms (7) on them.

5. Rosette of claim 2, **characterised in that** the cheek (9) is formed under the base (6) of a rosette.

6. Rosette of claim 1, **characterised in that** it comprises a centre (1, 2), in which there are slots (5) which define the elastic arms (7).

7. Rosette roll **characterised in that** it is composed of rosettes of any of the previous claims, interlocked with one another.
